# EUROPEAN PATENT APPLICATION

(11) **EP 1 793 219 A1**
(43) Date of publication of application: **06.06.2007**
(21) Application number: 05780431.2
(22) Date of filing: 12.08.2005
(51) Int. Cl.: G01N 7/14

(54) **METHOD AND APPARATUS FOR MEASURING CONCENTRATION OF DISSOLVED GAS IN LIQUID, AND APPARATUS FOR PRODUCING NITROGEN GAS DISSOLVED WATER**

(30) Priority: 31.08.2004 JP 2004252401
(71) Applicant: Kurita Water Industries Ltd., Shinjuku-ku, Tokyo 160-8383 (JP)
(72) Inventor: MORITA, Hiroshi, KURITA WATER INDUSTRIES LTD., Tokyo 160-8383 (JP)
(74) Representative: Goddar, Heinz J.
(86) International application number: PCT/JP2005/015116
(87) International publication number: WO 2006/025222

(57) **Abstract**

A method for measuring the concentration of gas dissolved in a liquid, in which a test liquid is introduced into a liquid phase chamber (3) separated with a gas permeation membrane (2), and the degree of vacuum of the gas phase in equilibrium with the liquid phase is measured while the operation of discharging condensed liquid in a gas phase chamber (4) to the outside is continuously conducted; an apparatus for measuring the concentration of gas dissolved in a liquid which has a gas permeation membrane (2) which is disposed in a closed vessel (1) and separates the vessel into a liquid phase chamber (3) into which the test liquid is introduced and a gas phase chamber (4) in which a pressure gauge (8) and an outlet pipe for discharging condensed liquid (7) are disposed, the degree of vacuum in the gas phase chamber (3) being measured by the pressure gauge (8); and an apparatus for producing water containing dissolved nitrogen gas which comprises the above apparatus disposed at a pipe for supplying water to an apparatus for dissolving gas to which deoxygenated ultra-pure water and nitrogen gas are supplied or a pipe for discharging water having dissolved nitrogen gas so that the amount of supplied nitrogen gas is adjusted in accordance with the concentration of dissolved gasses. The concentration of gas dissolved in a liquid flowing through a flow route can be measured as the total of the degrees of saturation with stability in a single procedure for a long period of time. Water containing dissolved nitrogen can be produced with stability.

## Description

### TECHNICAL FIELD

The present invention relates to a method for measuring the concentration of gas dissolved in a liquid, an apparatus for measuring the concentration and an apparatus for producing water containing dissolved nitrogen gas. More particularly, the present invention relates to a method for measuring the concentration of gas dissolved in a liquid which can easily obtain the concentration of gas dissolved in a liquid flowing through a flow route as the total of the degrees of saturation in a single procedure independently of the number of species of the gas and, in particular, is suitable for measuring the concentration of gas dissolved in water, an apparatus for measuring the above concentration and an apparatus for producing water containing dissolved nitrogen gas which can produce water containing dissolved nitrogen gas having a prescribed concentration of nitrogen gas easily with stability.

### BACKGROUND ART

The control of the concentration of a dissolved gas has been considered to be important in the technology of the liquid treatment such as the water treatment. For example, for ultra-pure water used for removing foreign substances from the surface of silicone substrates for semiconductors and glass substrates for liquid crystals in a wet cleaning process, it is required that the concentration of dissolved oxygen gas be decreased to an extremely small value so that spontaneous oxidation of the surface of the substrate is suppressed. The amount of dissolved oxygen gas can be decreased to the level of ppb by the vacuum degassing, the degassing with nitrogen or the catalytic degassing, and the concentration can be accurately measured by using a conventional instrument for measuring the amount of dissolved oxygen. Recently, the wet cleaning has made a remarkable progress, and cleaning water containing a specific gas alone in a prescribed concentration, which is so-called the functional cleaning water, is being applied. For example, cleaning water containing dissolved hydrogen gas alone in a concentration close to the saturation exhibits a great effect on removing fine particles on substrates. It is known that water containing dissolved nitrogen gas in a concentration close to the saturation also exhibits an excellent cleaning effect although the effect is not so remarkable as that of water containing dissolved hydrogen gas.

For efficiently dissolving a specific gas alone in water in a great concentration, it is desired that gasses already dissolved in water are removed in advance by a preliminary degassing treatment. The gasses to be removed by the preliminary degassing treatment include all types of dissolved gasses such as oxygen gas and nitrogen gas. To accurately evaluate the degree achieved by the treatment, it is necessary that at least both of the concentrations of dissolved oxygen gas and dissolved nitrogen gas be measured using a plurality of instruments for the measurement. When ultra-pure water which has not been degassed is used as the raw water for the functional water for cleaning, the degree achieved by the degassing treatment on the entire dissolved gasses can be approximately estimated by the measurement of the concentration of dissolved oxygen in accordance with an established method of the measurement. However, when ultra-pure water which has been deoxygenated is used as the raw water as used in manufacturing plants of the electronic industry, it is impossible that the degree of the preliminary degassing is estimated based on the concentration of dissolved oxygen gas since the concentration of dissolved oxygen gas is already as small as the level of ppb. Therefore, it has been inevitable that the above estimation is made by using an instrument for measuring the concentration of dissolved nitrogen gas which has inferior ability than that of the instrument for measuring the concentration of oxygen gas and is more expensive.

To overcome the above problem, it has been found by the present inventors that the concentration of gas dissolved in a liquid can be easily measured by using an apparatus in which a gas permeation membrane is disposed in a closed vessel to separate the vessel into a liquid phase chamber and a gas phase chamber, an inlet pipe for introducing a test liquid and an outlet pipe for discharging the test liquid are disposed at the liquid phase chamber, and a pressure gauge for measuring the degree of vacuum is disposed at the gas phase chamber and by measuring the degree of vacuum in the gas phase in the equilibrium condition with the liquid phase, and the novel measurement apparatus and the novel measurement method have both been established (Patent Reference 1). Due to this technology, the concentration of gas dissolved in a liquid can be obtained accurately in a single procedure using a very simple instrument. However, when the measurement is continued for a long period of time using this apparatus, a problem arises in that the accurate measurement becomes entirely impossible suddenly beyond some point of time.
[Patent Reference 1] Japanese Patent Application Laid-Open No. 2000-65710

### DISCLOSURE OF THE INVENTION

The present invention has an object of providing a method for measuring the concentration of gas dissolved in a liquid which can easily obtain the concentration of gas dissolved in a liquid flowing through a flow route as the total of the degrees of saturation in a single procedure independently of the number of species of the gas, is suitable for measuring the concentration of gas dissolved in water, in particular, and can easily measure the concentration for a long period of time with stability, an apparatus for measuring the above concentration and an apparatus for producing water containing dissolved nitrogen gas which can produce water containing dissolved nitrogen gas in a specific concentration easily with stability.

As the result of intensive studies to achieve the above object, the sudden failure of the measurement was found to be caused by the phenomenon that, when the liquid phase and the gas phase were present in a manner such that the amounts of the gas in the liquid phase and in the gas phase were in the equilibrium condition, vapor derived from the test liquid flowing through the liquid phase migrated into the gas phase during the measurement of the amount of the gas in the gas phase as the pressure, a portion of the migrated gas is condensed, and the liquid formed by the condensation was gradually accumulated at the side of the gas phase of the closed vessel used for the measurement of the gasses dissolved in the liquid, and it was found that the measurement of the concentration of gas dissolved in a liquid using a closed vessel having a gas permeation membrane and a pressure gauge as disclosed in the above Patent Reference could be conducted for a long period of time with stability by providing the function of discharging the liquid formed gradually by the condensation in the gas phase chamber with time. The present invention has been completed by forming a practically applicable process based on the mechanism for discharging the condensed liquid and establishing the method of operation of the process.

The present invention provides:
(1) A method for measuring a concentration of gas dissolved in a liquid, which comprises making a test liquid flow through a liquid phase chamber separated from a gas phase chamber with a gas permeation membrane and measuring a degree of vacuum of a gas phase in an equilibrium condition with a liquid phase while an operation of discharging condensed liquid in the gas phase chamber to outside is continuously conducted;
(2) The method for measuring a concentration of gas dissolved in a liquid described in (1), wherein an operation of discharging, condensed liquid in the gas phase chamber to outside is conducted by any one of pressing out, sucking out and flowing under weight of the liquid at intervals between the measurements;
(3) The method for measuring a concentration of gas dissolved in a liquid described in any one of (1) and (2), wherein A/B=1~500 (min/cm) when A (cm²) represents an area of the gas permeation membrane contacting the test liquid flowing through the liquid phase chamber, and B (cm³/min) represents a flow rate of the test liquid flowing through the liquid phase chamber;
(4) The method for measuring a concentration of gas dissolved in a liquid described in any one of (1), (2) and (3), wherein the degree of vacuum of a gas phase in an equilibrium condition with a liquid phase is measured, a temperature of the test liquid is measured, and the concentration of gas dissolved in a liquid is obtained based on the degree of vacuum and the temperature of the test liquid obtained by the measurements;
(5) The method for measuring a concentration of gas dissolved in a liquid described in any one of (1), (2), (3) and (4), wherein the test liquid is a liquid selected from pure water, ultra-pure water and cleaning water;
(6) An apparatus for measuring a concentration of gas dissolved in a liquid, which comprises a gas permeation membrane which is disposed in a closed vessel and separates the closed vessel into a liquid phase chamber and a gas phase chamber, an inlet pipe which is disposed at the liquid phase chamber and used for introducing a test liquid into the liquid phase chamber, an outlet pipe which is disposed at the liquid phase chamber and used for discharging the test liquid from the liquid phase chamber, an outlet pipe for condensed liquid which is disposed at the gas phase chamber and used for discharging the condensed liquid from the gas phase chamber and a pressure gauge for measuring a degree of vacuum in the gas phase chamber;
(7) The apparatus for measuring a concentration of gas dissolved in a liquid described in (6), wherein a volume of the gas phase chamber is 0.05 to 10 times as great as a volume of the liquid phase chamber;
(8) The apparatus for measuring a concentration of gas dissolved in a liquid described in any one of (6) and (7), which comprises a thermometer for measuring a temperature of the test liquid and a portion for calculation which obtains the concentration of gas dissolved in the test liquid by inputting the temperature of the test liquid and the degree of vacuum of the gas phase chamber which are obtained by the measurements; and
(9) An apparatus for producing water containing dissolved nitrogen gas, which comprises an apparatus for dissolving a gas, a pipe for supplying water which supplies deoxygenated ultra-pure water to the apparatus for dissolving a gas, a pipe for supplying nitrogen gas which supplies nitrogen gas to the apparatus for dissolving a gas and comprises a means for adjusting an amount of a supplied gas which adjusts an amount of supplied nitrogen gas, a pipe for discharging water containing dissolved nitrogen gas which is used for discharging water containing dissolved nitrogen gas from the apparatus for dissolving a gas and the apparatus for measuring a concentration of gas dissolved in a liquid described in (6) which is disposed at the pipe for supplying water or the pipe for discharging water containing dissolved nitrogen gas so that the amount of supplied nitrogen gas is adjusted in accordance with the concentration of gas dissolved in a liquid measured by the apparatus for measuring a concentration of gas dissolved in a liquid.

### BRIEF DESCRIPTION OF THE DRAWINGS

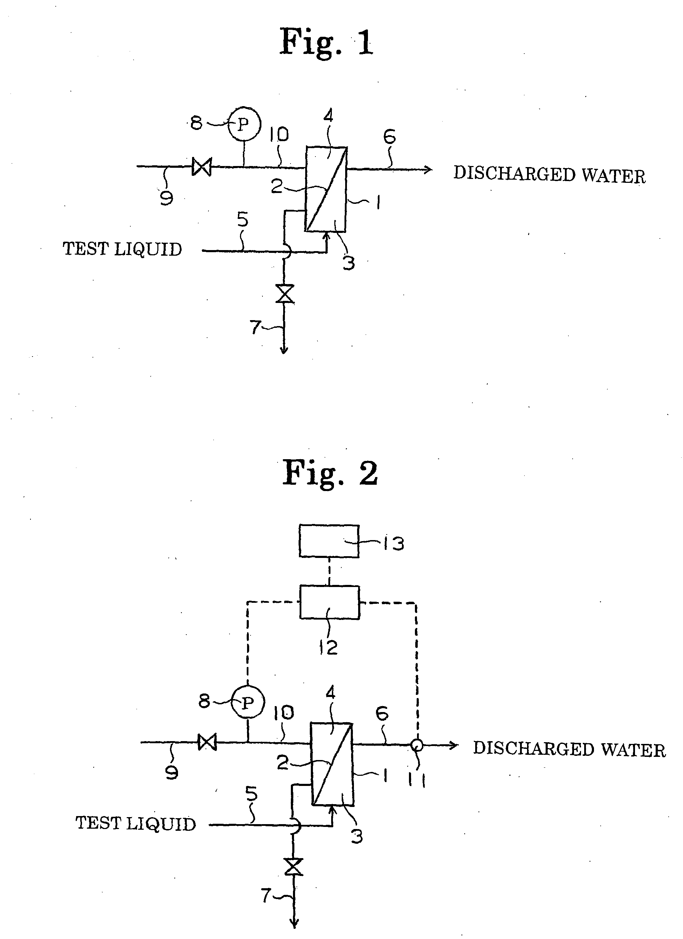

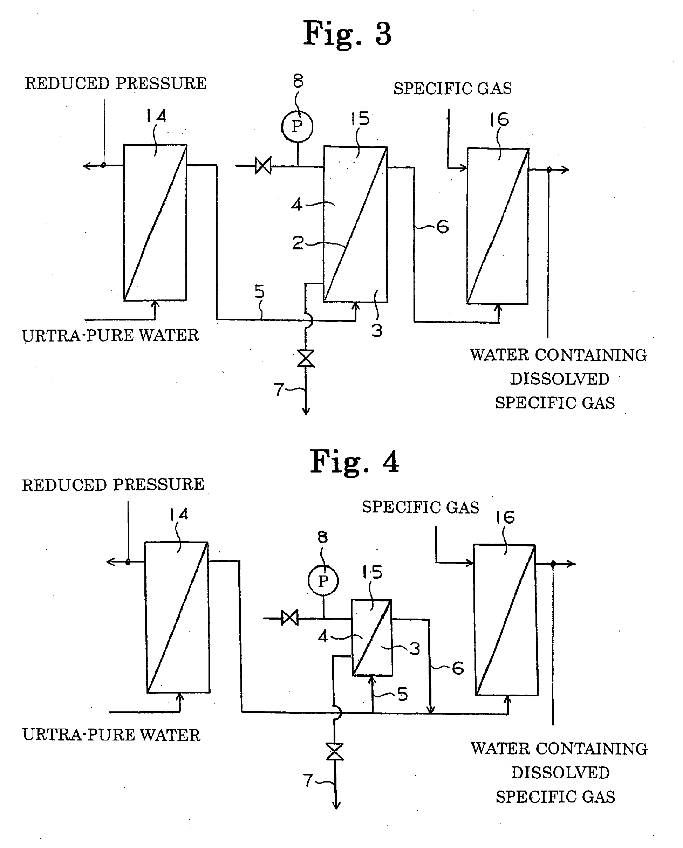

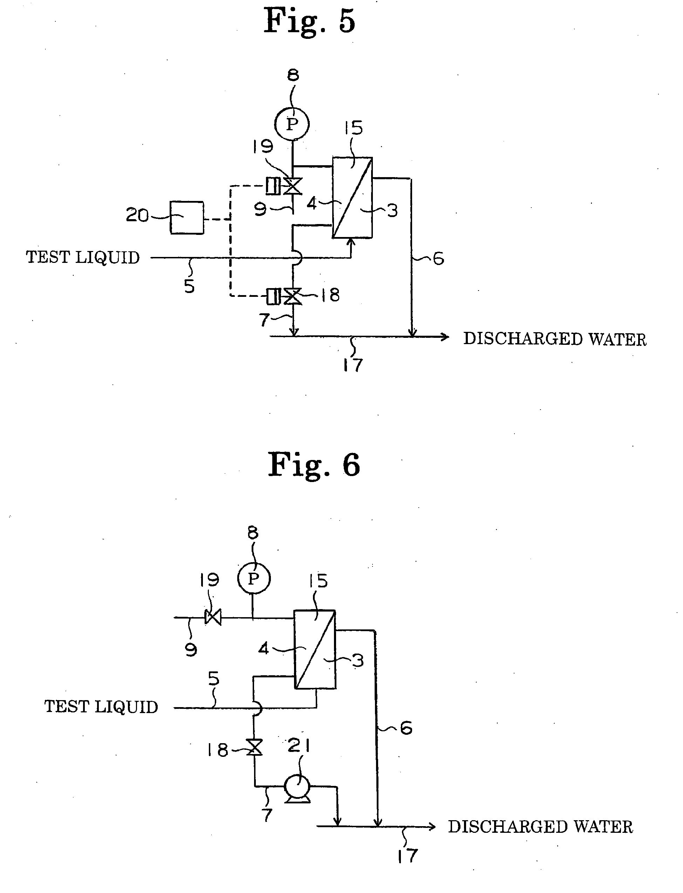

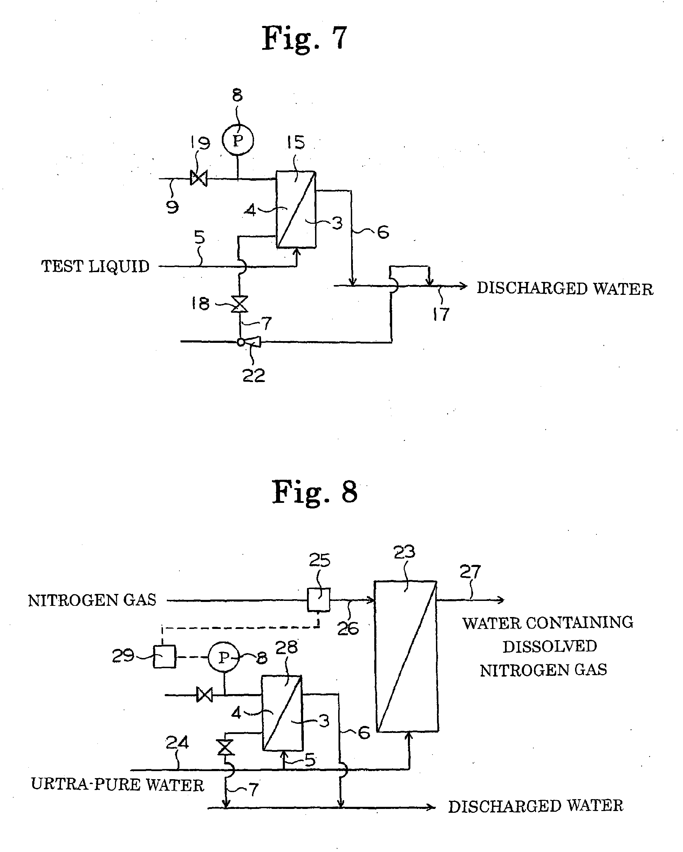

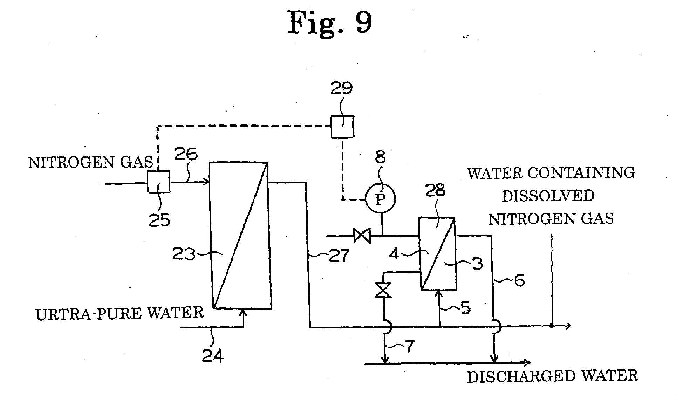

Figure 1 shows a diagram exhibiting an embodiment of the measurement apparatus of the present invention. Figure 2 shows a diagram exhibiting another embodiment of the measurement apparatus of the present invention. Figure 3 shows a flow diagram exhibiting an embodiment of the measurement method of the present invention. Figure 4 shows a flow diagram exhibiting another embodiment of the measurement method of the present invention. Figure 5 shows a diagram exhibiting an embodiment of the measurement apparatus of the present invention. Figure 6 shows a diagram exhibiting another embodiment of the measurement apparatus of the present invention. Figure 7 shows a diagram exhibiting another embodiment of the measurement apparatus of the present invention. Figure 8 shows a flow diagram exhibiting an embodiment of the apparatus for producing water containing dissolved nitrogen gas of the present invention. Figure 9 shows a flow diagram exhibiting another embodiment of the apparatus for producing water containing dissolved nitrogen gas of the present invention. In the Figures, the marks have the following meanings: 1 means a closed vessel, 2 means a gas permeation membrane, 3 means a liquid phase chamber, 4 means a gas phase chamber, 5 means an inlet pipe, 6 means an outlet pipe, 7 means an outlet pipe for condensed liquid, 8 means a pressure gauge, 9 means a pipe for supplying and discharging a gas, 10 means a connecting pipe, 11 means a thermometer, 12 means a portion for calculation, 13 means a portion for display, 14 means a module of degassing membrane, 15 means a measurement apparatus, 16 means a module of a dissolution membrane, 17 means a pipe for discharging water, 18 and 19 means valves, 20 means a controller for opening and closing a valve, 21 means a pump, 22 means an aspirator, 23 means an apparatus for dissolving a gas of the membrane type, 24 means a pipe for supplying water, 25 means a means for adjusting the amount of supplying a gas, 26 means a pipe for supplying nitrogen gas, 27 means a pipe for discharging water containing dissolved nitrogen gas, 28 means an apparatus for measuring the concentration of gas dissolved in a liquid, and 29 means an apparatus for control.

### THE MOST PREFERRED EMBODIMENT TO CARRY OUT THE INVENTION

In the method for measuring a concentration of gas dissolved in a liquid of the present invention, the concentration of gas dissolved in a liquid is obtained by making a test liquid flow through a liquid phase chamber separated from a gas phase chamber with a gas permeation membrane and measuring the degree of vacuum of the gas phase in the equilibrium condition with the liquid phase while the operation of discharging condensed liquid in the gas phase chamber is continued. In the method of the present invention, the degree of vacuum can be measured as the pressure of the gas phase chamber and can be expressed as any of the gauge pressure based on the atmospheric pressure which is set at 0 or the absolute pressure based on the pressure of the absolute vacuum which is set at 0. In the present invention, the frequency of discharging the condensed liquid in the gas phase chamber is not particularly limited. For example, the condensed liquid may be discharged at a regular interval, at irregular intervals or when it is detected that a prescribed amount of the liquid is accumulated.

In a system in which the liquid phase and the gas phase are present, the gasses in the liquid phase and in the gas phase are brought into the equilibrium condition, and the concentration of the gas dissolved in the liquid phase is proportional to the amount of the gas, i.e., the partial pressure of the gas, in the gas phase. The degree of saturation of a gas is defined as the value obtained by dividing the concentration of the gas dissolved in water by the solubility of the gas under a pressure of 0.1 MPa at a temperature of 25°C. In water which contacts the air and is in the equilibrium condition with the air under a pressure of 0.1 MPa at a temperature of 25°C, 8.1 mg/liter of oxygen gas and 13.8 mg/liter of nitrogen gas are dissolved. Since the solubility of oxygen gas into water is 40.4 mg/liter and the solubility of nitrogen gas is 17.6 mg/liter under the pressure of 0.1 MPa at the temperature of 25°C, the degree of saturation of oxygen gas is 0.2 and the degree of saturation of nitrogen is 0.8 in water which contacts the air and in the equilibrium condition with the air, and the total of the degrees of saturation is 1.0. When the above water is degassed so that the concentration of oxygen gas is 0.8 mg/liter and the concentration of nitrogen gas is 1.4 mg/liter, the total of the degrees of saturation of oxygen gas and nitrogen gas is 0.1. The pressure of the gas phase in the equilibrium condition with this water is 0.01 MPa, which gives a degree of vacuum of -0.09 MPa. Therefore, the concentration of dissolved gasses can be obtained in a single procedure as the overall value expressed by the unit of the degree of saturation by measuring the degree of vacuum of the gas phase in the equilibrium condition with water. For example, the degree of saturation of a gas in water is 0.1 when the degree of vacuum is -0.09, and the degree of saturation of a gas is 0.3 when the degree of vacuum is -0.07. Although the vapor pressure of water affects the degree of vacuum in the gas phase chamber, the vapor pressure of water at 25°C is 0.003 MPa and can be neglected in most of the cases. However, when a rigorous measurement is required, in particular, when the degree of vacuum is great and the absolute pressure of the gas phase chamber is small, it is preferable that the vapor pressure of water is taken into consideration.

In the method of the present invention, since the liquid phase and the gas phase are separated with the gas permeation membrane, movement of gas molecules between the gas phase and liquid phase is facilitated by an increase in the gas-liquid interface, and the equilibrium condition is achieved in a short time. When the concentration of the gas in the test liquid greatly fluctuates, the method of the present invention tends to show decreased stability of the equilibrium between the gas phase and liquid phase, and the measurement becomes difficult. The method of the present invention can be advantageously applied to the measurement of the concentration of a gas in a test liquid containing the gas dissolved in an approximately constant concentration such as degassed ultra-pure water and water containing specific dissolved gasses. When ultra-pure water is degassed, in general, the operation of the degassing apparatus is conducted under a stable condition, and the fluctuation in the concentration of the dissolved gas is small. When the degree of vacuum in the gas phase in the equilibrium condition with the liquid phase is constantly measured for a degassed water such as water described above, the degree of vacuum shows an approximately stable value, and the concentration of the dissolved gas can be easily obtained from the value of the degree of vacuum obtained by the measurement.

In the method of the present invention, the degree of vacuum of the gas phase in the equilibrium condition with the liquid phase is measured while the operations of making the test liquid flow through the liquid phase chamber and discharging the condensed liquid in the gas phase chamber are continued. When the flow of the test liquid through the liquid phase chamber is continued for a long period of time, the vapor of the test liquid permeates into the gas phase chamber through the gas permeation membrane, and a portion of the vapor permeated through the membrane is condensed and accumulated in the gas phase chamber. In an extreme case, the gas phase chamber is filled with the condensed liquid, and the measurement of the pressure becomes impossible. In the present invention, a pipe for discharging the condensed liquid is disposed at the gas phase chamber. The condensed liquid is discharged at a regular interval, at irregular intervals or when it is detected that a prescribed amount of the liquid is accumulated, and the degree of vacuum in the gas phase chamber can be measured continuously with stability. In the method of the present invention, the method for discharging the condensed liquid in the gas phase chamber is not particularly limited. For example, the condensed liquid may be forced out by adding a pressure to the gas phase chamber, sucked out by a pump or an aspirator attached to the pipe for discharging condensed liquid, or allowed to flow under the weight of the condensed liquid itself by keeping the gas phase chamber at the ordinary pressure. The method of the present invention can be applied to the measurement of the concentration of dissolved gasses using pure water, ultra-pure water or cleaning water prepared by degassing pure water or ultra-pure water and dissolving a specific gas as the test liquid.

In the method of the present invention, it is preferable that the temperature of the liquid is taken into consideration in the measurement of the concentration of dissolved gasses. The concentration of dissolved gasses in the liquid can be obtained more accurately based on the measurement of the temperature of the test liquid and the knowledge on the concentration of the dissolved gasses based on the concentrations of saturation of the gasses at the obtained temperature and the degree of vacuum of the gas phase obtained by the measurement.

The apparatus for measuring a concentration of gas dissolved in a liquid of the present invention comprises a gas permeation membrane which is disposed in a closed vessel and separates the vessel into a liquid phase chamber and a gas phase chamber, an inlet pipe which is disposed at the liquid phase chamber and used for introducing a test liquid into the liquid phase chamber, an outlet pipe which is disposed at the liquid phase chamber and used for discharging the test liquid from the liquid phase chamber, an outlet pipe for condensed liquid which is disposed at the gas phase chamber and used for discharging the condensed liquid from the gas phase chamber and a pressure gauge for measuring the degree of vacuum in the gas phase chamber. Figure 1 shows a diagram exhibiting an embodiment of the measurement apparatus of the present invention. In the measurement apparatus of the present embodiment, a gas permeation membrane 2 is disposed in a closed vessel 1, and the vessel is separated into a gas liquid phase chamber 3 at one side of the membrane and a liquid phase chamber 4 at the other side of the membrane. An inlet pipe 5 used for introducing a test liquid into the liquid phase chamber and an outlet pipe 6 used for discharging the test liquid from the liquid phase chamber are disposed at the liquid phase chamber. An outlet pipe for discharging condensed liquid 7 used for discharging the condensed liquid from the gas phase chamber is disposed at the gas phase chamber 4. A pressure gauge 8 for measuring the degree of vacuum is disposed at the gas phase chamber 4. A pipe for supplying and discharging a gas 9 is disposed at the gas phase chamber so that the gas phase chamber can be opened to the atmosphere, where necessary. The pressure gauge 8 and the gas phase chamber 4 are connected to each other through a connecting pipe 10. The pipe for supplying and discharging a gas 9 is formed as a branch of the connecting pipe 10.

To prepare water containing a dissolved specific gas by dissolving the specific gas into water, the dissolution proceeds easily without adding the specific gas under pressure when water treated by degassing in advance is made flow through a module of a dissolution membrane equipped with a gas permeation membrane for dissolving the specific gas. This phenomenon takes place when water treated by the degassing is brought into equilibrium with the gas phase in accordance with the Henry's law. When the gas is not added to the module of a dissolution membrane, transfer of the gas remaining in the gas phase into the water phase proceeds in the module, and the gas phase has a reduced pressure. The degree of the reduction in the pressure exactly reflects the degree of degassing of the degassed water, i.e., the concentration of the dissolved gas in the degassed water. Therefore, the composition of the gas in the gas phase chamber at the beginning of the measurement does not affect the degree of vacuum in the gas phase chamber in the gas-liquid equilibrium condition. The gas phase chamber may be filled with the atmospheric air or may be in vacuum at the beginning of the measurement. When the test liquid is introduced into the liquid phase chamber, and the liquid phase and the gas phase are brought into the equilibrium condition, the same degree of vacuum can be achieved. To measure the concentration of the gas dissolved in a liquid using the measurement apparatus of the present invention, the degree of vacuum of the gas phase in the gas phase chamber 4 is measured by the pressure gauge 8 while the test liquid is continuously introduced into the liquid phase chamber 3 of the closed vessel 1 through the inlet pipe 5 and continuously discharged from the outlet pipe 6. When the degree of vacuum in the gas phase chamber is approximately constant, the degree of vacuum under this condition is used as the degree of vacuum to be obtained. At this time, the ratio of the pressure of the gas phase chamber to the atmospheric pressure corresponds to the ratio of the concentration of the gas dissolved in the test liquid to the concentration of the gas dissolved in the saturated condition under exposure to the atmosphere. Therefore, the concentration of the dissolved gas can be obtained. The measurement apparatus of the present invention can be advantageously used for the measurement of the concentration of gas dissolved in water which is degassed for preparing water containing a specific dissolved gas.

In the present invention, since the vapor of the test liquid is transferred to the gas phase chamber and condensed during the continued measurement and the condensed liquid is accumulated in the gas phase chamber, the condensed liquid accumulated in the gas phase chamber 4 is discharged to the outside of the closed vessel 1 through the outlet pipe for condensed liquid 7 while the measurement of the degree of vacuum is temporarily suspended or between the measurements of the degree of vacuum. By discharging the condensed liquid to the outside, the condition allowing the measurement of the dissolved gasses can be always maintained.

Figure 2 shows a diagram exhibiting another embodiment of the measurement apparatus of the present invention. In the measurement apparatus of the present embodiment, a means for correction of temperature is added to the measurement apparatus of the embodiment shown in Figure 1. A thermometer 11 is disposed at the outlet pipe 6 from the liquid phase chamber 3, and a portion for calculation 12 and a portion for display 13 are disposed. The temperature of the test liquid measured by the thermometer 11 and the degree of vacuum of the gas phase chamber 4 measured by the pressure gauge 8 are transferred to the portion for calculation 12. The result of calculation obtained in the portion for calculation is transferred to the portion for display 13 and displayed. In the embodiment shown in Figure 2, the thermometer 11 is disposed at the pipe for discharge 6. However, the thermometer may be disposed at the inlet pipe 5 or at the liquid phase chamber 3.

The concentration of the dissolved gas in the liquid can be obtained by multiplying the concentration of saturation of the dissolved gas by the degree of saturation. The degree of saturation is a known value decided by the type of the gas dissolved in the liquid and the temperature of the liquid. The types of the gas, the temperature and the concentration of saturation at the temperature are input into the portion for calculation 12 and memorized. For example, when the test liquid is water substantially containing dissolved hydrogen gas alone, the concentration of saturation at 25°C is 1.56 mg/liter, and the concentration of saturation at 15°C is 1.69 mg/liter. These values are stored in the portion for calculation 12 as data. On the other hand, the degree of saturation can be obtained from the degree of vacuum of the gas phase chamber 4 of the closed vessel 1. For example, when the degree of vacuum is -0.10 MPa (the vacuum), the degree of saturation is 0%; when the degree of vacuum is ±0 MPa (the atmospheric pressure), the degree of saturation is 100%; and when the degree of vacuum is -0.01 MPa, the degree of saturation is 90%.

In the measurement apparatus shown in Figure 2, the test liquid is supplied to the liquid phase chamber 3 of the closed vessel 1 and discharged through the outlet pipe 6. The temperature of the liquid is measured by the thermometer 11 disposed at the outlet pipe 6, and the value obtained by the measurement is transferred to the portion for calculation 12. The degree of vacuum of the gas phase chamber 4 is measured by the pressure gauge 8, and the value obtained by the measurement is transferred to the portion for calculation 12. Based on these procedures, the degree of saturation is obtained in the portion for calculation from the value of the measurement of the degree of vacuum. The concentration of saturation is obtained from the measured temperature of the liquid based on the memorized data. The concentration of the gas dissolved in the liquid can be obtained by calculation from the degree of saturation and the concentration of saturation. The obtained concentration of the gas dissolved in the liquid is displayed in the portion for display 13. As the result, the concentration of saturation dependent on the temperature can be known by measuring the temperature of the liquid, and the more accurate concentration of the dissolved gas can be can be known.

The concentration of saturation of the dissolved gas depends on the temperature of the liquid. For example, when hydrogen gas is dissolved into water, the concentration of saturation at 25°C is 1.56 mg/liter, and the concentration of saturation at 15°C is 1.69 mg/liter. With respect to water containing hydrogen in which hydrogen alone is dissolved in sufficiently degassed water at a temperature of 25°C, when the degree of vacuum of the gas phase in the closed vessel is -0.01 MPa, i.e., the degree of saturation is 90%, 1.56x0.90=1.40 mg/liter of hydrogen gas is dissolved. When the temperature of the same water containing hydrogen is lowered to 15°C, the degree of saturation of water containing 1.40 mg/liter of hydrogen gas becomes 1.40/1.69=0.83, i.e., the degree of saturation becomes 83%, and the degree of vacuum of the gas phase becomes -0.017 MPa.

When the degree of saturation of hydrogen gas is regarded simply as 1.56 mg/liter without recognizing the dependency of the concentration of saturation of the dissolved gas on the temperature, calculation on -0.017 MPa at the degree of saturation of 83% gives 1.56x0.83=1.29 mg/liter. For example, when pure water having a temperature showing seasonal changes due to the temperature change in the raw water such as city water and industrial water is treated, it is preferable that the temperature dependency of the concentration of saturation of the dissolved gas, which is the object of the measurement, is input into the portion for calculation in advance, and the degree of vacuum of the gas phase in the closed vessel is converted into the concentration of the dissolved gas based on the input data. In the preparation of cleaning water containing a specific gas to which a very great purity is required, in general, ultra-pure water having the controlled temperature is used as the raw water. The temperature does not show fluctuations since the temperature of the water is kept at a prescribed temperature. Therefore, the temperature correction of the degree of vacuum is not necessary.

Figure 3 shows a flow diagram exhibiting an embodiment of the method of measurement of the present invention. The mark 14 means a module of a degassing membrane, the mark 15 means the apparatus for measuring the concentration of gas dissolved in a liquid of the present invention, the mark 16 means a module of a dissolution membrane, and marks for the portions in the apparatus for measuring the concentration of dissolved gasses are the same as those described for the apparatus shown in Figure 1. The gas phase chamber in the module of degassing is kept at a reduced pressure, and ultra-pure water is introduced into the liquid phase chamber. Dissolved gasses are transferred to the gas phase chamber via the gas permeation membrane, and the ultra-pure water becomes degassed water. The degassed water is introduced into the liquid phase chamber 3 of the measurement apparatus 15 of the present invention via the inlet pipe 5. The liquid phase and the gas phase achieve the equilibrium condition via the gas permeation membrane, and the pressure gauge 8 shows a constant degree of vacuum. The total of the concentrations of dissolved gasses in the degassed water can be obtained as the degree of saturation from the obtained value. The degassed water discharged from the measurement apparatus 15 via the outlet pipe 6 is then introduced into the module of a dissolution membrane 16. The specific gas supplied to the gas phase chamber of the module of a dissolution membrane 16 is dissolved into the introduced water, and water containing the dissolved specific gas is prepared. The amount of the specific gas corresponding to the vacancy in the degree of saturation in the degassed water, i.e., the amount corresponding to the value obtained by subtracting the degree of saturation from the 100% degree of saturation, is easily dissolved into the degassed water in the module of a dissolution membrane. In the present embodiment, the measurement apparatus has the same structure as that of the module of a degassing membrane or the module of a dissolution membrane, and the entire amount of the degassed water is introduced into the measurement apparatus.

Figure 4 shows a flow diagram exhibiting another embodiment of the method of measurement of the present invention. In the present embodiment, the apparatus for measuring the concentration of a gas dissolved in a liquid 15 of the present invention is disposed at a position branched from the main pipe supplying the degassed water obtained in the module of a degassing membrane 14 to the module of a dissolution membrane 16. The gas phase chamber in the module of a degassing membrane 14 is kept at a reduced pressure, and ultra-pure water is introduced into the liquid phase chamber. Dissolved gasses are transferred to the gas phase chamber via the gas permeation membrane, and the ultra-pure water becomes degassed water. A portion of the degassed water flows through a branch from the main pipe, introduced into the measurement apparatus 15 of the present invention and discharged from the measurement apparatus. The discharged water may be recycled into the main pipe or removed to the outside of the system. In the measurement apparatus, the liquid phase and the gas phase achieves the equilibrium condition, and the pressure gauge 8 shows a constant degree of vacuum. The total of the concentrations of dissolved gasses in the degassed water can be obtained from the obtained value as the degree of saturation. The degassed water is then introduced into the module of a dissolution membrane 16. The specific gas supplied to the gas phase chamber of the module of a dissolution membrane 16 is dissolved into the introduced water, and water containing the dissolved specific gas is prepared. The amount of the specific gas corresponding to the vacancy in the degree of saturation in the degassed water, i.e., the amount corresponding to the value obtained by subtracting the degree of saturation from the 100% degree of saturation, is easily dissolved into the degassed water in the module of a dissolution membrane. In the present embodiment, the measurement apparatus can be made smaller than that of the module of a degassing membrane or the module of a dissolution membrane. In the present embodiment, the degassed water may be made flow through the measurement apparatus continuously or at the time necessary for the measurement. The measurement can be conducted when the degree of vacuum is kept constant. The greater the volume of the liquid phase chamber relative to the volume of the gas phase chamber and the greater the area of the membrane for permeation of gasses, the shorter the time for achieving the equilibrium condition in the concentrations of the gas between the liquid phase and the gas phase. Therefore, it is preferable that the measurement apparatus is constructed so as to satisfy the above condition. By applying the method and the apparatus for measuring the concentration of gas dissolved in a liquid of the present invention, the total of the concentrations of dissolved gasses in ultra-pure water, which is attracting attention recently, can be measured very easily in a single procedure, and the control of the above value is facilitated. The value obtained by using the measurement method and the measurement apparatus of the present invention is not the absolute concentration of an individual gas component but the total of the degrees of saturation. This value is the number directly reflecting the efficiency of dissolution when a specific gas is dissolved in a later stage. Therefore, the obtained value provides a very useful information.

Figures 5, 6 and 7 show diagrams specifically exhibiting the mechanism of discharging the condensed liquid in the measurement apparatus of the present invention. In Figure 5, the mark 7 means an outlet pipe for condensed liquid used for discharging the condensed liquid accumulated in the gas phase chamber 4 and has an end portion open at a lower portion of the gas phase chamber and the other end portion connected to the pipe for discharging water 17. A valve which is opened and closed 18 is disposed at the outlet pipe for condensed liquid 7. The mark 9 means pipe for supplying and discharging a gas which is connected to the gas phase chamber 4 and has a valve which is opened and closed 19. In the present embodiment, the pipe for supplying and discharging a gas 9 is disposed as a branch from a connecting pipe connecting the pressure gauge 8 for measuring the degree of vacuum of the gas phase and the gas phase chamber 4, and the other end portion of the pipe for supplying and discharging a gas 9 is open to the atmosphere. The mark 20 means a controller for opening and closing the valve which can send directions to the valves which are opened and closed 18 and 19. When the condensed liquid is accumulated in the gas phase chamber of the closed vessel due to the flow of the liquid, the condensed liquid is discharged to the outside by opening the valve 18 disposed at the outlet pipe for condensed liquid 7 connected at a lower portion. At this time, the condensed liquid can be discharged to the outside simply by opening the valve 18 when the pressure of the gas phase chamber is kept the same as or higher than the atmospheric pressure. To adjust the pressure of the gas phase chamber 4 at the atmospheric pressure, the valve which can be opened and closed 19 is opened so that the chamber is temporarily made open to the atmosphere. In this case, the condensed liquid can be discharged in a short time by the synchronous operation of the valves 19 and 18. When the pressure of the gas phase chamber is lower than the atmospheric pressure, the condensed liquid cannot be discharged simply by opening the valve 18 since the backward flow takes place from the open side of the outlet pipe for condensed liquid. In this case, the condensed liquid can be discharged to the outside by sucking the outlet pipe for condensed liquid using a suitable means. In the embodiment shown in Figure 6, a pump 21 disposed at the outlet pipe for condensed liquid is used as the means for sucking the condensed liquid. In the embodiment shown in Figure 7, the condensed liquid is sucked using an aspirator 22 as the means for sucking the condensed liquid. The aspirator is disposed at a pipe through which driving water flows, and the end portion of the outlet pipe for the condensed liquid 7 is connected to the vacuum portion of the aspirator 22. In this case, the condensed liquid can be discharged by flowing under the weight of the liquid or by synchronous sucking. When the condensed liquid has been discharged to the outside, the valves are quickly closed, and the condition for the measurement is restored.

In the method of the present invention, the discharge of the condensed liquid may be conducted at a regular interval or at irregular intervals. As shown in Figure 5, the regular discharge can be easily performed by using a controller for opening and closing a valve having a timer 20 as the controller for opening and closing a valve 20. Alternatively, the condition of accumulation of the condensed liquid may be detected using a suitable means, and the valve may be operated when the accumulation reaches to a prescribed amount. The condition of accumulation of the condensed liquid can be detected by disposing a level meter to the closed vessel or by measuring the weight of the closed vessel. Automation of the discharge of the condensed liquid can be achieved using a combination of the above means and an automatic valve

In the measurement apparatus of the present invention, when the volume of the gas phase chamber is excessively great relative to the volume of the liquid phase chamber, the response time for reflecting the degree of saturation of the dissolved gasses in the liquid flowing through the apparatus to the degree of vacuum of the gas phase chamber increases. On the other hand, when the volume of the gas phase chamber is excessively small, the condensed liquid is accumulated in a short time, and it is necessary that the interval between discharges of the condensed liquid be set at a short time. Since the measurement cannot be conducted during the operation of discharge of the condensed liquid, it is not desirable that the relative volume of the gas phase chamber is decreased more than necessary to cause frequent operations of discharge. In the measurement apparatus of the present invention, it is preferable that the volume of the gas phase chamber is 0.05 to 10 time and more preferably 0.1 to 2 times as great as the volume of the liquid phase chamber.

In the method of the present invention, the condition of making the liquid flow through the closed vessel equipped with the gas permeation membrane is not particularly limited. When the flow rate is excessively small, the response time for reflecting the degree of saturation of the dissolved gasses in the liquid flowing through the vessel to the pressure of the gas phase increases. The greater the flow rate, the shorter the response time. However, there is the limit to increasing the flow rate due to the construction of the apparatus for the practical application such as the piping and joints. In particular, when a closed vessel which is used for the measurement alone is disposed and the liquid flowing through this closed vessel is discharged for disposal, it is preferable that the amount of the liquid used for the measurement is smaller. In the method of the present invention, it is preferable that A/B=1~500 (min/cm) and more preferably A/B=5~100 (min/cm) when A (cm²) represents the area of the gas permeation membrane contacting the test liquid flowing through the liquid phase chamber, and B (cm³/min) represents the flow rate of the test liquid flowing through the liquid phase chamber.

The apparatus for producing water containing dissolved nitrogen gas of the present invention comprises an apparatus for dissolving a gas, a pipe for supplying water which supplies deoxygenated ultra-pure water to the apparatus for dissolving a gas, a pipe for supplying nitrogen gas which supplies nitrogen gas to the apparatus for dissolving a gas and comprises a means for adjusting the amount of the supplied gas which adjusts the amount of supplied nitrogen gas, a pipe for discharging water containing dissolved nitrogen gas which is used for discharging water containing dissolved nitrogen gas from the apparatus for dissolving a gas and the apparatus for measuring the concentration of gas dissolved in a liquid described above which is disposed at the pipe for supplying water or the pipe for discharging water containing dissolved nitrogen gas so that the amount of supplied nitrogen gas is adjusted in accordance with the concentration of gas dissolved in the liquid measured by the apparatus for measuring the concentration of gas dissolved in a liquid.

Figure 8 shows a flow diagram exhibiting an embodiment of the apparatus for producing water containing dissolved nitrogen gas of the present invention. The production apparatus of the present embodiment comprises an apparatus for dissolving gasses of the membrane type 23, a pipe for supplying water 24 for supplying deoxygenated ultra-pure water to the apparatus for dissolving gasses of the membrane type, a pipe for supplying nitrogen gas 26 equipped with a means for adjusting the amount of supplying a gas 25 which adjusts the amount of supplying nitrogen gas, a pipe for discharging water containing dissolved nitrogen gas 27 for discharging water containing dissolved nitrogen gas from the apparatus for dissolving gasses of the membrane type and an apparatus for measuring the concentration of gas dissolved in a liquid 28 of the present invention which is disposed at the pipe for supplying water.

Figure 9 shows a flow diagram exhibiting another embodiment of the apparatus for producing water containing dissolved nitrogen gas of the present invention. The production apparatus of the present embodiment comprises an apparatus for dissolving gasses of the membrane type 23, a pipe for supplying water 24 for supplying deoxygenated ultra-pure water to the apparatus for dissolving gasses of the membrane type, a pipe for supplying nitrogen gas 26 equipped with a means for adjusting the amount of supplying a gas 25 which adjusts the amount of supplying nitrogen gas, a pipe for discharging water containing dissolved nitrogen gas 27 for discharging water containing dissolved nitrogen gas from the apparatus for dissolving gasses of the membrane type and an apparatus for measuring the concentration of gas dissolved in a liquid 28 of the present invention which is disposed at the pipe for discharging water containing dissolved nitrogen gas.

In the apparatuses of the embodiments shown in Figures 8 and 9, an apparatus for control 29 which obtains the amount of supplying nitrogen gas from the difference between the concentration of nitrogen gas dissolved in ultra-pure water calculated based on the signal from the pressure gauge 8 and the desired concentration of nitrogen gas in the water containing dissolved nitrogen gas and sends a signal to a means for adjusting the amount of supplying a gas 25 such as a valve for adjusting the flow rate of nitrogen gas, is disposed. In many cases, deoxygenated ultra-pure water is stored in a storage tank, and the space at the inside of the tank is filled with nitrogen gas. The concentration of nitrogen gas dissolved in the ultra-pure water is different depending on the means for deoxygenation. When the deoxygenation is conducted by degassing under vacuum or degassing using a membrane, the concentration of dissolved nitrogen gas is very small. When the deoxygenation is conducted by the nitrogen degassing using nitrogen gas, the concentration of dissolved nitrogen gas is close to the saturation. In both cases, nitrogen gas filling the space at the inside of the tank is dissolved during the storage in the storage tank, and ultra-pure water substantially containing dissolved nitrogen gas alone is obtained. However, the amount of dissolved nitrogen gas varies depending on the residence time in the storage tank and the amount of water in the storage tank, and the concentration of dissolved nitrogen gas in the ultra-pure water supplied from the storage tank is not constant.

In the apparatus for producing water containing dissolved nitrogen gas of the embodiment shown in Figure 8, ultra-pure water is supplied to a water chamber which is one of chambers separated with a gas permeation membrane in an apparatus for dissolving gasses of the membrane type 23 via a pipe for supplying water 24, and nitrogen gas is supplied to a gas chamber which is the other chamber separated with the gas permeation membrane via a pipe for supplying nitrogen gas 26. Nitrogen gas permeates through the gas permeation membrane and is dissolved into ultra-pure water. Water containing dissolved nitrogen gas is discharged from a pipe for discharging water containing dissolved nitrogen gas 27. A portion of the ultra-pure water supplied to the apparatus for dissolving gasses of the membrane type via an inlet pipe 5 is made flow through a branched from the pipe for supplying water 24 and introduced into the measurement apparatus 28 of the present invention. In the measurement apparatus 28, the degree of vacuum in the gas phase chamber 4 is measured, and the obtained value is input into the apparatus for control 29. The concentration of dissolved nitrogen gas in the supplied ultra-pure water is obtained and compared with the desired concentration of nitrogen gas in water containing dissolved nitrogen gas, and the amount of supplying nitrogen gas supplied to the apparatus for dissolving gasses of the membrane type 23 is calculated. The result of the calculation is transferred to the means for adjusting the amount of supplying nitrogen gas 25, and nitrogen gas in the adjusted amount is supplied to the gas chamber in the apparatus for dissolving gasses of the membrane type. In this manner, the concentration of nitrogen gas dissolved in the supplied ultra-pure water is measured, and nitrogen gas in the amount corresponding the difference from the desired concentration of nitrogen gas in the water containing dissolved nitrogen gas is supplied to the apparatus for dissolving gasses of the membrane type. Thus, water containing dissolved nitrogen gas in a constant concentration can be produced with stability.

In the apparatus for producing water containing dissolved nitrogen gas of the embodiment shown in Figure 9, the measurement apparatus 28 of the present invention measures the degree of vacuum using water containing dissolved nitrogen gas flowing through the pipe for discharging water containing dissolved nitrogen gas 27 as the test liquid, and the concentration of dissolved nitrogen gas is obtained. For this procedure, the measurement apparatus 28 is disposed at a branch from the pipe for discharging water containing dissolved nitrogen gas 27. The concentration of dissolved nitrogen gas in the water containing dissolved nitrogen gas is obtained and compared with the desired concentration of nitrogen gas in the water containing dissolved nitrogen gas, and the amount of supplying nitrogen gas supplied to the apparatus for dissolving gasses of the membrane type 23 is calculated. The necessary amount of nitrogen gas is supplied to the apparatus for dissolving gasses of the membrane type under control, and water containing dissolved nitrogen gas in the desired concentration can be obtained.

In the embodiments shown in Figures 8 and 9, condensed water in the gas phase chamber 4 in the measurement apparatus 28 is discharged from the outlet pipe 7 for discharging condensed water at a desired time, and the stable measurement is conducted. In the above descriptions, the apparatus for dissolving gasses of the membrane type is used. Alternatively, other conventional means for the gas-liquid contact such as means of blowing and means of mixing with sucking can be used as the apparatus for dissolving gasses. By using the apparatus for producing water containing dissolved nitrogen gas of the present invention, the concentration of dissolved nitrogen gas in ultra-pure water or water containing dissolved nitrogen gas is accurately obtained, and the amount of supplying nitrogen gas to the apparatus for dissolving gasses is controlled in accordance with the obtained concentration. Therefore, water containing dissolved water in a constant concentration can be produced with stability.

### EXAMPLES

The present invention will be described more specifically with reference to examples in the following. However, the present invention is not limited to the examples.

### Example 1 (Evaluation of the degree of degassing in a preliminarily degassed water)

Ultra-pure water which had a concentration of dissolved oxygen gas of 8.0 mg/liter and had not been treated by degassing was made flow through module of a degassing membrane [a 4-inch module; the trade name: LIQUI-CEL; manufactured by HOECHST-CELANESE Company] at a flow rate of 16.7 liters/min, and the degassing was conducted with a membrane using a vacuum pump. A portion of the preliminarily degassed water obtained above in an amount of 1.67 liters/min was passed through a 2.5 inch module having the same construction as that of the above module. The gas phase was closed, and the degree of vacuum was measured. Since the gas permeation membrane in this 2.5 inch module had an area A of 14,000 cm² and the flow rate B of the test liquid was 1,670 cm³/min, A/B was 8.4 min/cm. Since the volume of the gas phase chamber of the 2.5 inch module was 150 cm³ and the volume of the liquid phase chamber was 400 cm³, the volume of the gas phase chamber was 0.375 times as great as that of the liquid phase chamber.

Separately, the concentration of dissolved oxygen gas in the preliminarily degassed water was measured using a meter for dissolved oxygen of the membrane type. As the result, the degree of vacuum was -0.09 MPa with stability, and the concentration of dissolved oxygen gas was 0.8 mg/liter. The obtained value showed that the concentration of dissolved oxygen gas was decreased to 1/10 of the value before being degassed. The value of the degree of vacuum showed that the total of the concentrations of dissolved gasses was decreased to 1/10 of the value before being degassed. Both results showed excellent agreement.

However, when the degree of degassing was continuously measured while the degassed water having the concentration of dissolved oxygen gas of 0.8 mg/liter and water which was not treated by the degassing and had the concentration of dissolved oxygen gas of 8 mg/liter were made alternately flow through the closed vessel, the gas phase chamber was filled with condensed water on the third day, and the measurement became impossible.

When a closed vessel having a pipe for discharging condensed water attached to the gas phase chamber was used and the operation of discharging condensed water was conducted once a day, the amount of the remaining condensed water was kept at a half or less of the volume of the gas phase chamber, and the normal measurement could be conducted continuously for 30 days.

### Example 2 (Evaluation of the degree of degassing in a preliminarily degassed water)

Using ultra-pure water which had been treated by degassing and had a concentration of dissolved oxygen gas of 5 µg/liter and the saturated concentration of dissolved nitrogen gas, the same procedures as those conducted in Example 1 were conducted. Although the accurate measurement of the concentration of dissolved oxygen gas in the preliminarily degassed water was difficult, the degree of vacuum of the gas phase chamber in the 2.5 inch module was -0.09 MPa, which was the same as that in Example 1. This result shows that the total of the concentrations of dissolved gasses was decreased to 1/10 of that before being degassed. The concentration of dissolved oxygen gas was measured before and after the degassing using a meter for the concentration of dissolved gasses. The concentration was 18.6 mg/liter before being degassed and 1.9 mg/liter after being degassed. This result agrees well with the change in the concentration of dissolved oxygen gas obtained from the degree of vacuum.

When the concentration of dissolved gasses in the preliminarily degassed water was measured continuously, the gas phase chamber was filled with condensed water on the second day, and the measurement became impossible.

When a closed vessel having a pipe for discharging condensed water attached to the gas phase chamber was used and the operation of discharging condensed water was conducted twice a day in the morning and in the evening, the amount of the remaining condensed water was kept at a half or less of the volume of the gas phase chamber, and the normal measurement could be conducted continuously for 30 days.

### Example 3 (Evaluation of ultra-pure water)

Recently, ultra-pure water used in plants of the electronic industry is, in many cases, subjected to purging with nitrogen gas in a tank to prevent degradation of the quality. Although the concentration of dissolved oxygen gas in the ultra-pure water is rigorously controlled, the concentration of nitrogen gas is left without control in many cases. The amount of dissolved nitrogen gas is small when the produced ultra-pure water is used within a short time but is increased when the period of time kept in the tank is increased.

In a plant of the electronic industry, ultra-pure water degassed using a membrane was stored in a tank purged with nitrogen gas. The same 2.5 inch module as that used in Example 1 was disposed in the system of ultra-pure water. The degree of vacuum of the gas phase in the equilibrium condition with the ultra-pure water was measured, and the concentration of dissolved nitrogen gas was measured using a meter for the concentration of dissolved nitrogen gas. At the beginning, the degree of vacuum was -0.09 MPa, and the concentration of dissolved nitrogen gas was 1.9 mg/liter. When the degree of vacuum in the gas phase decreased gradually to -0.08 MPa, -0.07 MPa, -0.06 MPa, -0.05 MPa and -0.04 MPa, the concentration of dissolved nitrogen gas was increased to 3.7 mg/liter, 5.6 mg/liter, 7.4 mg/liter, 9.3 mg/liter and 11.2 mg/liter, - respectively. The degree of vacuum and the concentration of dissolved oxygen showed excellent agreement.

When the concentration of dissolved gasses in ultra-pure water which was subjected to purging with nitrogen gas in the tank was continuously measured using the same 2.5 inch module as that used in Example 1, the gas phase chamber was filled with condensed water on the fourth day, and the measurement became impossible.

When a closed vessel having a pipe for discharging condensed water attached to the gas phase chamber was used and the operation of discharging condensed water was conducted once a day, the amount of the remaining condensed water was kept at a half or less of the volume of the gas phase chamber, and the normal measurement could be conducted continuously for 30 days.

### Example 4 (Production of water containing dissolved nitrogen gas)

Water containing dissolved nitrogen gas was produced using the apparatus shown in Figure 8.

The production apparatus of the present invention was applied to the system in which ultra-pure water degassed using a membrane and subjected to purging with nitrogen gas in a tank in the same manner as that described in Example 3 was used as the raw water, and the concentration of dissolved nitrogen gas was increased to 90% of the saturation, i.e., about 17 mg/liter, by dissolving nitrogen gas in the apparatus for dissolving nitrogen gas.

In the apparatus shown in Figure 8, a portion of ultra-pure water having the concentration of dissolved nitrogen gas changing depending on the time of storage in the tank is made flow through a branch before being supplied to the apparatus for dissolving nitrogen gas 23 having a gas permeation membrane in the apparatus and made flow through the apparatus for measuring the concentration of dissolved gasses 28 of the present invention. The pressure of the measurement apparatus changed between -0.09 MPa and -0.04 MPa, and the change showed excellent agreement with the change obtained by the measurement using the meter for the concentration of dissolved gasses, which was between 1.9 to 11.2 mg/liter. A system was constructed so that the difference between the pressure of -0.01 MPa corresponding to the desired concentration of dissolved nitrogen gas of 17 mg/liter and the pressure obtained by the measurement using the measurement apparatus, which was between -0.09 MPa and -0.04 MPa, was automatically calculated, and the amount of supplying nitrogen gas was controlled in a manner such that the amount of nitrogen gas corresponding to the difference obtained by the calculation was supplied to the apparatus for dissolving gasses of the membrane type 23 in the later stage.

When the continuous operation was conducted without disposing the pipe of discharging condensed water to the gas phase chamber of the measurement apparatus, the gas phase chamber was filled with condensed water on the fourth day, and the measurement became impossible. When the pipe of discharging condensed water was disposed and condensed water was discharged once a day, the normal measurement could be conducted continuously for 30 days. Water containing dissolved nitrogen gas having the concentration of dissolved nitrogen at the desired value of about 17 mg/liter could be produced with stability.

### Example 5 (Production of water containing dissolved nitrogen gas)

Water containing dissolved nitrogen gas was produced using the apparatus shown in Figure 9 in accordance with the same procedures as those conducted in Example 4.

In the apparatus shown in Figure 9, a portion of water containing dissolved nitrogen gas flowed out of the apparatus for dissolving nitrogen gas 23 having a gas permeation membrane was separated and made flow through the measurement apparatus 28 of the present invention. In the present Example, the amount of nitrogen gas was controlled in a manner such that the concentration of dissolved nitrogen gas in water containing dissolved nitrogen gas was made closer to the desired value of 17 mg/liter. When the pipe for discharging condensed water was not disposed at the gas phase chamber of the measurement apparatus, the gas phase chamber was filled with condensed water on the fifth day, and the measurement became impossible. The control of the concentration of dissolved nitrogen gas became also impossible. When the pipe of discharging condensed water was disposed and condensed water was discharged once a day, the normal measurement could be conducted continuously for 30 days. Water containing dissolved nitrogen gas having the concentration of dissolved nitrogen at the object value, which was about 17 mg/liter, could be produced with stability.

### INDUSTRIAL APPLICABILITY

By applying the method and the apparatus for measuring the concentration of dissolved gases in a liquid of the present invention, the total of the concentrations of dissolved gasses in ultra-pure water, which is attracting attention recently, could be measured very easily in a single procedure, and the control of the concentration can be facilitated. The value obtained by using the method and the apparatus of the present invention is not the absolute concentration of the individual gas component but the total of the concentrations. This value directly reflects the efficiency of dissolution when a specific gas is dissolved in a later stage and is very useful information. In particular, since the measurement of the concentration of dissolved nitrogen gas requires an expensive instrument and a high grade of expertise, the present method and apparatus are considered to provide the optimum technology when the concentration of dissolved nitrogen gas is measured using ultra-pure water containing nitrogen gas alone as the test liquid. The present method and apparatus are considered to provide the optimum technology also when the concentration of an inert gas such as argon and helium which is difficult to be obtained in other methods is measured. By using the apparatus for producing water containing dissolved nitrogen gas of the present invention, water containing dissolved nitrogen gas having the constant object value of the concentration of dissolved nitrogen gas can be produced with stability using ultra-pure water having a changing concentration of dissolved nitrogen gas as the raw water.

## Claims

1. A method for measuring a concentration of gas dissolved in a liquid, which comprises making a test liquid flow through a liquid phase chamber separated from a gas phase chamber with a gas permeation membrane and measuring a degree of vacuum of a gas phase in an equilibrium condition with a liquid phase while an operation of discharging condensed liquid in the gas phase chamber to outside is continuously conducted.

2. The method for measuring a concentration of gas dissolved in a liquid according to Claim 1, wherein an operation of discharging condensed liquid in the gas phase chamber to outside is conducted by any one of pressing out, sucking out and flowing under weight of the liquid at intervals between the measurements.

3. The method for measuring a concentration of gas dissolved in a liquid according to any one of Claims 1 and 2, wherein A/B=1~500 (min/cm) when A (cm²) represents an area of the gas permeation membrane contacting the test liquid flowing through the liquid phase chamber, and B (cm³/min) represents a flow rate of the test liquid flowing through the liquid phase chamber.

4. The method for measuring a concentration of gas dissolved in a liquid according to any one of Claims 1, 2 and 3, wherein the degree of vacuum of a gas phase in an equilibrium condition with a liquid phase is measured, a temperature of the test liquid is measured, and the concentration of gas dissolved in a liquid is obtained based on the degree of vacuum and the temperature of the test liquid obtained by the measurements.

5. The method for measuring a concentration of gas dissolved in a liquid according to any one of Claims 1, 2, 3 and 4, wherein the test liquid is a liquid selected from pure water, ultra-pure water and cleaning water.

6. An apparatus for measuring a concentration of gas dissolved in a liquid, which comprises a gas permeation membrane which is disposed in a closed vessel and separates the closed vessel into a liquid phase chamber and a gas phase chamber, an inlet pipe which is disposed at the liquid phase chamber and used for introducing a test liquid into the liquid phase chamber, an outlet pipe which is disposed at the liquid phase chamber and used for discharging the test liquid from the liquid phase chamber, an outlet pipe for condensed liquid which is disposed at the gas phase chamber and used for discharging the condensed liquid from the gas phase chamber and a pressure gauge for measuring a degree of vacuum in the gas phase chamber.

7. The apparatus for measuring a concentration of gas dissolved in a liquid according to Claim 6, wherein a volume of the gas phase chamber is 0.05 to 10 times as great as a volume of the liquid phase chamber.

8. The apparatus for measuring a concentration of gas dissolved in a liquid according to any one of Claims 6 and 7, which comprises a thermometer for measuring a temperature of the test liquid and a portion for calculation which obtains the concentration of gas dissolved in the test liquid by inputting the temperature of the test liquid and the degree of vacuum of the gas phase chamber which are obtained by the measurements.

9. An apparatus for producing water containing dissolved nitrogen gas, which comprises an apparatus for dissolving a gas, a pipe for supplying water which supplies deoxygenated ultra-pure water to the apparatus for dissolving a gas, a pipe for supplying nitrogen gas which supplies nitrogen gas to the apparatus for dissolving a gas and comprises a means for adjusting an amount of a supplied gas which adjusts an amount of supplied nitrogen gas, a pipe for discharging water containing dissolved nitrogen gas which is used for discharging water containing dissolved nitrogen gas from the apparatus for dissolving a gas and the apparatus for measuring a concentration of gas dissolved in a liquid described in Claim 6 which is disposed at the pipe for supplying water or the pipe for discharging water containing dissolved nitrogen gas so that the amount of supplied nitrogen gas is adjusted in accordance with the concentration of gas dissolved in a liquid measured by the apparatus for measuring a concentration of gas dissolved in a liquid.
